# EUROPÄISCHE PATENTANMELDUNG

(11) **EP 4 464 458 A1**
(43) Veröffentlichungstag der Anmeldung: **20.11.2024**
(21) Anmeldenummer: 23173492.2
(22) Anmeldetag: 15.05.2023
(51) Int. Cl.: B23Q 1/76, B23B 3/06, B23B 25/00, B23C 3/16, B23B 5/48

(54) **WERKZEUGMASCHINE ZUR HERSTELLUNG EINES WERKSTÜCKS MIT EINER AUSSENKONTUR UND VERFAHREN HIERZU**

(71) Anmelder: WFL Millturn Technologies GmbH & Co. KG, 4030 Linz (AT)
(72) Erfinder: MARINGER, Herbert, 4642 Sattledt (AT)
(74) Vertreter: Jell, Friedrich

(57) **Zusammenfassung**

Es wird eine Werkzeugmaschine (1) zur Herstellung eines Werkstücks (2) mit einer Außenkontur (3), insbesondere eines Rotors eines Schraubenverdichters, und ein Verfahren hierzu gezeigt. Um bei geringen Taktzeiten eine hohe Herstellungsgenauigkeit zu gewährleisten, wird vorgeschlagen, dass das Werkstück (2, 200) an der Au-ßenkontur (3) zumindest an einer ersten und einer zweiten Abstützfläche (11, 12a, 12b), insbesondere Gleitfläche, einer Abstützeinrichtung (10) abgestützt wird, wobei zumindest diese beiden Abstützflächen (11, 12a, 12b) um die Drehachse (D) zueinander winkelversetzt angeordnet sind, wobei die erste und/oder die zweite Abstützfläche (11, 12a, 12b) über zumindest einen, insbesondere linear, geführten Schlitten (13, 14) am Werkstück (2, 200) angestellt wird, der an einem Z-Schlitten (8) der Werkzeugmaschine (1) vorgesehen ist.

## Beschreibung

Die Erfindung betrifft eine Werkzeugmaschine zur Herstellung eines Werkstücks mit einer Außenkontur, insbesondere eines Rotors eines Schraubenverdichters, und ein Verfahren hierzu.

Um an einem Rotor eines Schraubenverdichters eine Außenkontur zu erzeugen, sind verschiedenste spanende Verfahren und Werkzeugmaschinen hierfür bekannt (vgl. EP2149425B1). In den meisten Fällen wird ein Werkstück in einer um eine Drehachse in Z-Richtung der Werkzeugmaschine drehbaren Werkstückaufnahme der Werkzeugmaschine eingespannt und anschließend eventuell auch unter dessen Drehung mit einem Fräswerkzeug spanend bearbeitet, um am Werkstück die schraubensymmetrische Außenkontur zu erzeugen. Je nach gewähltem Verfahren führt dies zu einer bestimmten Taktzeit. Diese Taktzeit zu verringern, ist vergleichsweise komplex, vorwiegend dann, wenn reproduzierbar eine hohe Genauigkeit an der Außenkontur gefordert wird.

Die Erfindung hat sich daher die Aufgabe gestellt, ein Verfahren der eingangs geschilderten Art in der Taktzeit zu verbessern, ohne damit aber die Reproduzierbarkeit in der Herstellungsgenauigkeit zu verringern.

Die Erfindung löst die gestellte Aufgabe durch die Merkmale des Anspruchs 1.

Indem das Werkstück an der Außenkontur zumindest an einer ersten und einer zweiten Abstützfläche, insbesondere Gleitfläche, einer Abstützeinrichtung abgestützt wird, wobei zumindest diese beiden Abstützflächen um die Drehachse zueinander winkelversetzt angeordnet sind, kann zunächst auch bei vergleichsweise schweren Werkstücken Durchbiegungen, beispielsweise aufgrund des Werkstückgewichts oder von Bearbeitungskräften, eine exakte Positionierung sichergestellt und damit reproduzierbar eine Außenkontur erzeugt werden. Um durch dieses Anstellen der Abstützflächen die Taktzeit dennoch kleinzuhalten, wird vorgeschlagen, dass die erste und/oder die zweite Abstützfläche über zumindest einen, insbesondere linear, geführten Schlitten am Werkstück angestellt wird, der an einem Z-Schlitten der Werkzeugmaschine vorgesehen ist. Über das Schlittensystem kann nämlich die jeweilige Abstützfläche vergleichsweise schnell und positionsgenau verfahren und damit angestellt werden. Das erfindungsgemäße Verfahren ermöglicht daher kurze Taktzeiten bei hoher Herstellungsgenauigkeit, was die Reproduzierbarkeit des Verfahrens erheblich verbessert.

Vorzugsweise wird die erste Abstützfläche mit dem ersten am Z-Schlitten geführten Schlitten angestellt. Diese Anstellung der ersten Abstützfläche kann beispielsweise in X-Richtung der Werkzeugmaschine erfolgen.

Vorstellbar ist weiter, dass die zweite Abstützfläche über einen zweiten Schlitten angestellt wird, welcher zweite Schlitten am ersten Schlitten geführt ist. Diese Anstellung der zweiten Abstützfläche kann beispielsweise in Y-Richtung der Werkzeugmaschine erfolgen.

Damit kann bei minimalem Zeitaufwand eine exakte und positionsgenaue Abstützung des Werkstücks zur Verfügung gestellt werden, wodurch das spanende Bearbeiten besonders exakt und stabil ausgeführt werden kann.

Beispielsweise verlaufen die Längsrichtungen der ersten und/oder zweiten Abstützfläche im Wesentlichen in Z-Richtung der Werkzeugmaschine, um die Genauigkeit des Verfahrens weiter zu erhöhen. Insbesondere bei Werkstücken mit einer zylindrischen äußeren Hüllkontur kann vorteilhaft sein.

Beispielsweise wird die erste und/oder zweite Abstützfläche in radiale Richtung an das Werkstück hingeführt. Dies vereinfacht die Handhabung des Verfahrens weiter. Zudem kann eine radiale Anstellung vergleichsweise reproduzierbar zu einer standfesten Abstützung des Werkstücks führen.

Vorstellbar ist, dass der Schlitten nach dem Hinführen der ersten und/oder zweiten Abstützfläche in seiner Position festgeklemmt wird. Dies stellt auch bei hohen Kräften auf die Abstützung eine genaue Bearbeitung sicher.

Vorzugsweise wird das abgestützte Werkstück unter Drehung um die, insbesondere durch das Werkstück zentrisch verlaufende, Drehachse spanend bearbeitet wird, um die Taktzeit weiter verringern zu können.

Insbesondere kann sich aber das erfindungsgemäße Verfahren zur taktschnellen Herstellung von Werkstücken mit zueinander unterschiedlichen Außenkonturen auszeichnen. Beispielsweise indem nacheinander zwei Werkstücke, hergestellt werden, wobei die Abstützeinrichtung zwei zweite Abstützflächen aufweist, die jeweils eines der Werkstücke abstützen, wobei die zweiten Abstützflächen an einander gegenüberliegenden Außenseiten des zweiten Schlittens angeordnet sind. Dies ist insbesondere bei zwei in der Außenkontur verschiedene Rotoren eines Doppel-Schraubenverdichters von Vorteil.

Beispielsweise kann die erfindungsgemäße Abstützung auch Teil eines Komplettbearbeitungsverfahrens sein, in dem vor der Abstützung des Werkstücks eine spanende Vorbearbeitung des Werkstücks stattfindet, bei der mit zwei einander am Werkstück, insbesondere diametral, gegenüberliegenden Drehwerkzeugen die Außenkontur mit Aufmaß eingebracht wird. Dies kann die Taktzeit in der Herstellung formgenauer Werkstücke weiter verringern.

Die Erfindung hat sich außerdem die Aufgabe gestellt, eine Werkzeugmaschine zu derart konstruktiv zu verändern, dass damit reproduzierbar mit einer hohen Genauigkeit schnell an einem Werkstück eine Außenkontur erzeugt werden kann. Zudem soll sich die Werkzeugmaschine durch eine konstruktive Einfachheit und Robustheit auszeichnen.

Die Erfindung löst die gestellte Aufgabe durch den Anspruch 8.

Indem an einem mit einem Z-Schlitten an einem Maschinenbett der Werkzeugmaschine, der eine Abstützeinrichtung zum Abstützen des eingespannten Werkstücks bei dessen spanenden Bearbeitung aufweist, kann die Werkstückbearbeitung genauer und stabiler erfolgen. Dies insbesondere dann, wenn die Abstützeinrichtung eine erste und eine zweite Abstützfläche, insbesondere Gleitfläche, aufweist, die zueinander um die Drehachse winkelversetzt angeordnet sind. Weist zudem der Z-Schlitten zusätzlich zumindest einen, insbesondere linear, geführten Schlitten aufweist, an dem die erste und/oder zweite Abstützfläche vorgesehen ist, kann diese Abstützeinrichtung zeitreduziert an das Werkstück exakt angestellt werden. Die erfindungsgemäße Werkzeugmaschine kann daher auch bei der Herstellung von Werkstücken eine geringe Taktzeit sicherstellen.

Vorzugsweise weist ein am Z-Schlitten, insbesondere in X-Richtung der Werkzeugmaschine, geführter erster Schlitten die erste Abstützfläche auf.

Vorstellbar ist weiter, dass ein am ersten Schlitten, insbesondere in Y-Richtung der Werkzeugmaschine, geführter zweiter Schlitten die zweite Abstützfläche aufweist. Mit diesem Schlittensystem kann zudem die Handhabung der Abstützung vereinfacht werden.

Vorstellbar ist, dass der erste Schlitten eine, insbesondere abgewinkelte, Konsole aufweist, an deren zweiten Konsolenschenkel der zweite Schlitten beweglich gelagert ist, um damit die Konstruktion der Werkzeugmaschine weiter zu vereinfachen. Die Konsole kann zwei Schenkeln aufweisen, die in einem rechten Winkel zueinander abgewinkelt sind.

Vorzugsweise ist zwischen Z-Schlitten und ersten Schlitten eine erste Linearführung, insbesondere Profilschienenführung, vorgesehen.

Beispielsweise ist zwischen erstem und zweitem Schlitten eine zweite Linearführung, insbesondere Profilschienenführung, vorgesehen ist.

Die Konstruktion der Werkzeugmaschine kann beispielsweise weiter vereinfacht werden, wenn die erste Abstützfläche von einer Gleitleiste und/oder die zweite Abstützfläche von zumindest einer Gleitplatte ausgebildet wird.

Vorzugsweise weist der zweite Schlitten zwei zweite Abstützflächen auf, die an einander gegenüberliegenden Außenseiten des zweiten Schlittens vorgesehen sind, um damit entsprechend den Anforderungen der spanenden Bearbeitung an der äußeren Hüllkontur von unterschiedlichen Seiten anstellen zu können. Vorzugsweise liegen die Außenseiten je in einer X-Z-Ebene der Werkzeugmaschine.

Weitere Bearbeitungsschritte können von der Werkzeugmaschine, beispielsweise zur Vorbearbeitung, ausgeführt werden, wenn dass der Z-Schlitten zusätzlich einen beweglichen Werkzeughalter für ein Werkzeug, insbesondere Drehwerkzeug, aufweist, welcher Werkzeughalter angeordnet ist. Beispielsweise ist der Werkzeughalter in Z-Richtung gesehen neben der Abstützeinrichtung angeordnet.

Dies beispielsweise auch mit kurzen Taktzeiten, wenn die Werkzeugmaschine einen Werkzeugwechsler aufweist, der an einem Ende der Z-Bettführung der Werkzeugmaschine angeordnet und ausgebildet ist, um das Werkzeug des Werkzeughalters des Z-Schlittens zu wechseln.

In den Figuren ist beispielsweise der Erfindungsgegenstand anhand eines Ausführungsbeispiels näher dargestellt. Es zeigen
- Fig. 1: eine dreidimensionale Teilansicht zu einer Werkzeugmaschine beim spanenden Bearbeiten eines vorbearbeiteten Werkstücks,
- Fig. 2: eine Stirnansicht auf das Werkstück der Fig. 1 mit einer angestellter Abstützeinrichtung,
- Fig. 3: eine Schnittansicht durch die nach Fig. 2 dargestellte Abstützeinrichtung,
- Fig. 4: eine Stirnansicht auf ein anderes Werkstück mit einer angestellter Abstützeinrichtung und
- Fig. 5: eine dreidimensionale Teilansicht zu der Werkzeugmaschine beim spanenden Vorbearbeiten des Werkstücks nach Fig. 1.

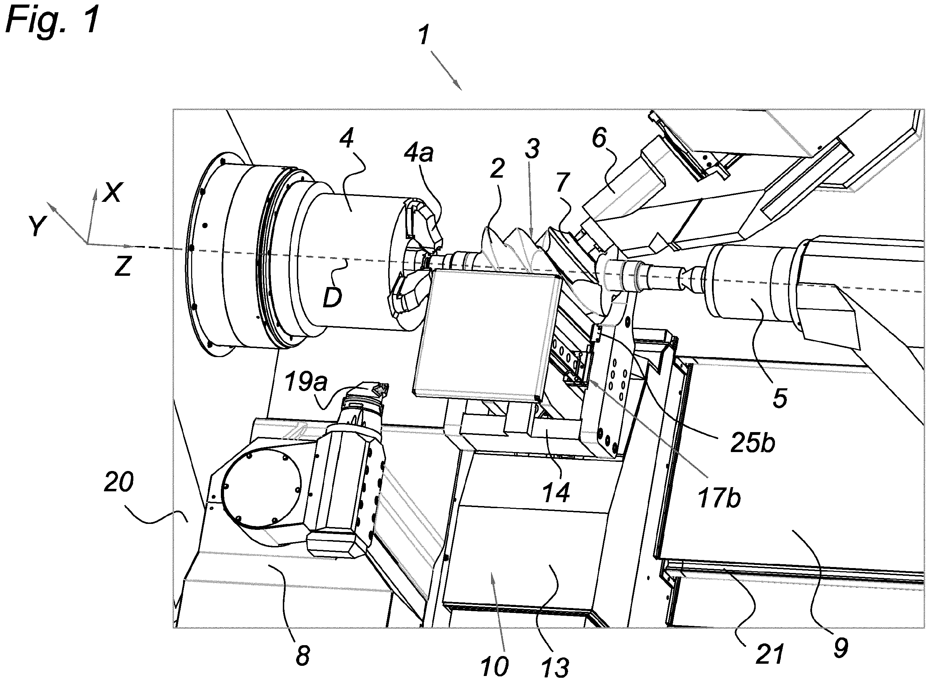

Nach Fig. 1 wird beispielsweise eine Werkzeugmaschine 1 dargestellt, die an einem Werkstück 2, 200 eine Außenkontur 3 herstellt. Das in Fig. 1 dargestellte Werkstück 2 ist ein Rotor eines Schraubenverdichters.

Das Werkstück 2 ist in einem Werkstückhalter 4a einer Werkstückspindel 4 eingespannt und wird am gegenüberliegenden Werkstückende von einem Reitstock 5 abgestützt. Die Werkstückspindel 5 ist ausgebildet, das Werkstück 2 um eine Drehachse D in Z-Richtung der Werkzeugmaschine 1 zu drehen.

Die Werkzeugmaschine 1 weist zudem eine mehrachsig bewegbare Werkzeugspindel 6 für ein Werkzeug 7, nämlich Fräswerkzeug, zur spanenden Bearbeitung des Werkstücks 2 auf, um damit die schraubensymmetrische Außenkontur 3 des Rotors zu erzeugen.

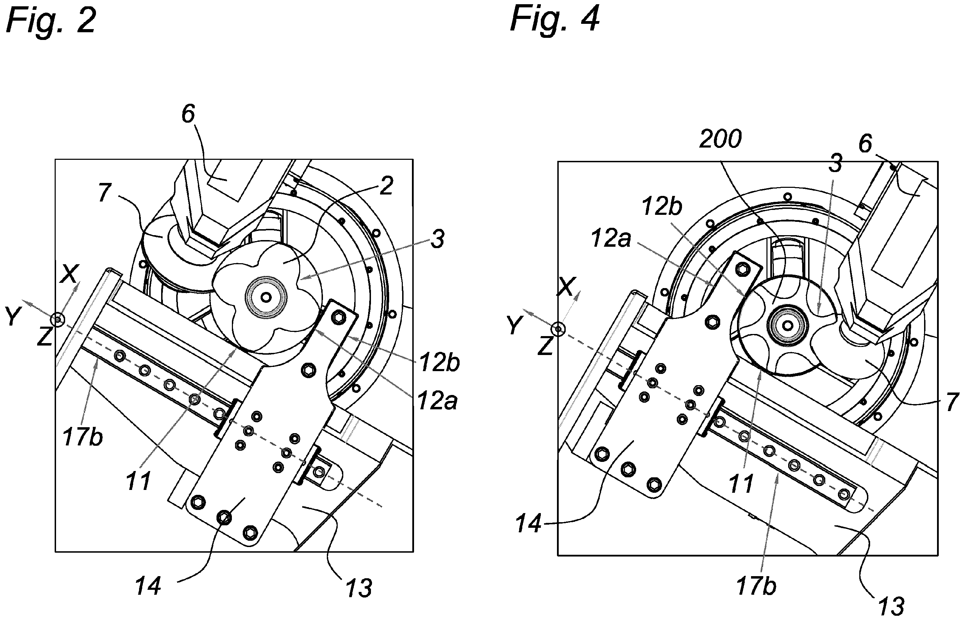

Damit dies reproduzierbar mit hoher Genauigkeit und geringer Taktzeit erfolgen kann, ist erfindungsgemäß ein Z-Schlitten 8 am Maschinenbett 9 der Werkzeugmaschine 1 vorgesehen. Mit diesem in Z-Richtung bewegbaren Z-Schlitten 8 wird das Werkstück 2 bei seiner Bearbeitung mit dem als Fräswerkzeug ausgeführten Werkzeug 7 abgestützt. Hierzu weist -wie in Fig. 2 im Detail zu erkennen, der Z-Schlitten 8 einen Abstützeinrichtung 10 mit einer ersten als Gleitfläche ausgeführte Abstützfläche 11 und einer zweiten ebenso als Gleitfläche ausgeführten Abstützfläche 12a, 12b auf. Die erste und zweite Abstützfläche 11, 12a, 12b sind zueinander um die Drehachse D winkelversetzt angeordnet, was eine besonders exakte Abstützung bei verschiedenen Anstellwinkeln des Fräswerkzeugs 7 an das Werkstück 2 sicherstellt.

Diese Anstellung ist auch verfahrensschnell möglich, da der Z-Schlitten 8 zumindest einen linear geführten Schlitten 13, 14 mit entweder der ersten oder der zweiten Abstützfläche 11, 12a, 12b aufweist. Über den betreffenden Schlitten 13, 14 wird die erste oder die zweite Abstützfläche 11, 12a oder 12b an das Werkstück 2 angestellt. Damit ist eine Werkzeugmaschine 1 geschaffen, mit der reproduzierbar mit einer hohen Genauigkeit schnell an einem Werkstück 2 eine Außenkontur 3 erzeugt werden kann.

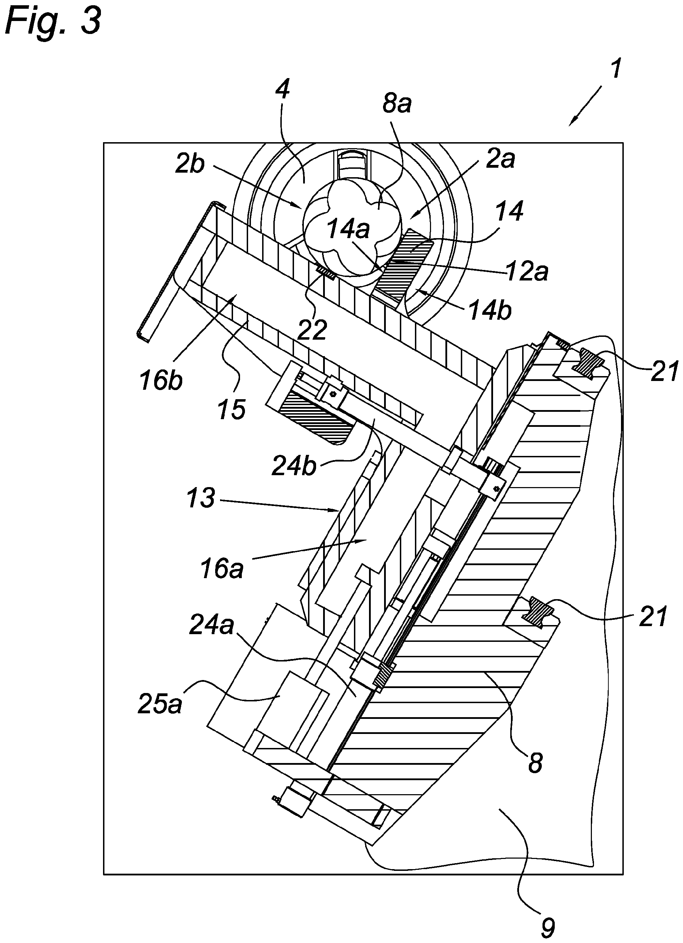

Wie in Fig. 2 und 3 dargestellt wird die erste Abstützfläche 11 mit dem ersten Schlitten 13 in X-Richtung der Werkzeugmaschine 1 und die zweite Abstützfläche 12a, 12b mit dem zweiten Schlitten 14 in Y-Richtung der Werkzeugmaschine 1 angestellt. Hierbei wird der zweite Schlitten 14 am ersten Schlitten 13 linear geführt, wie in Fig. 2 und 3 zu erkennen. Zwischen den X, Y, Z-Richtungen besteht ein rechter Winkel, wie in den Figuren zu erkennen. Die erste und/oder zweite Abstützfläche 11, 12a oder 12b können auch in radiale Richtung an das Werkstück 2 hingeführt werden.

Wie der Fig. 3 entnommen werden kann, weist der erste Schlitten 13 eine L-förmige Konsole 15 auf. An dem zweiten Konsolenschenkel 16b der Konsole 15 ist der zweite Schlitten 14 beweglich gelagert, und zwar entlang einer zweiten Linearführung 17b. Der erste Konsolenschenkel 16a der Konsole 15 ist am Z-Schlitten 8 beweglich gelagert, und zwar entlang einer ersten Linearführung 17a. Damit ergibt sich ein Schlittensystem am Z-Schlitten 8.

Die erste und zweite Linearführungen 17a, 17b weisen je zwei Profilschienen auf, wie beispielsweise für die zweite Linearführung 17b in Fig. 2 und 3 zu erkennen, wodurch diese Linearführungen 17a, 17b als Profilschienenführung ausgeführt sind. Die zwei Profilschienen der zweiten Linearführungen 17b sind an der Außenseite des zweiten Konsolenschenkels 16b der Konsole 15 befestigt.

Zudem umgreift der zweite Schlitten 14 den Konsolenschenkel 16b des ersten Schlittens 13 rahmenartig. Über ein zweites Stellmittel 24a, nämlich Hydraulikzylinder, zwischen dem ersten und zweiten Schlitten 13, 14 wird der zweite Schlitten 14 bewegt. Zudem ist ein zweites Klemmelement 25b zwischen erstem und zweitem Schlitten 13, 14 vorgesehen, womit der zweite Schlitten 14 in seiner Position am zweiten Schlitten 13 festgeklemmt werden kann.

Über ein erstes Stellmittel 24a, nämlich Hydraulikzylinder, zwischen dem ersten Schlitten 13 und dem Z-Schlitten 8 wird der erste Schlitten 13 bewegt. Zudem ist ein erstes Klemmelement 25a zwischen erstem Schlitten 13, 14 und Z-Schlitten 8 vorgesehen, womit der erste Schlitten 13 in seiner Position am Z-Schlitten 8 festgeklemmt werden kann.

Wie zu dem in der Fig. 3 zu erkennen, wird die erste Abstützfläche 11 von einer Gleitleiste 22 ausgebildet. Am zweiten Schlitten 14 befindet sich zwei zweite Abstützflächen 12a, 12b. Diese zweiten Abstützflächen 12a, 12b werden von je einer Gleitplatten 23 gebildet. Die zweiten Abstützflächen 12a, 12b sind auf gegenüberliegenden Außenseiten 14a, 14b des zweiten Schlittens 14 vorgesehen, und zwar in X-Z-Ebene, wie in Fig. 3 zu erkennen. Damit ist es möglich den zweiten Schlitten 14 auf beiden gegenüberliegenden Längsseiten 2a, 2b des Werkstücks 2 anzustellen. Dies ist von Vorteil, wenn zwei unterschiedliche Werkstücke 2, 200, nämlich zwei in der Außenkontur 3 verschiedene Rotoren eines Doppel-Schraubenverdichters, gefertigt werden, wie im Vergleich zwischen Fig. 2 und Fig. 4 zu erkennen.

Beispielsweise ist aufgrund eines begrenzten Schwenkbereiches des Werkzeugs 7 an der, insbesondere oberen, Werkzeugspindel 6, für die Herstellung unterschiedlicher Schraubensteigungsrichtungen die wahlweise Anstellung des Werkzeugs 7, insbesondere in Y-Richtung, oberhalb oder unterhalb des Werkstückes 2 erforderlich. Dies kann mit dem zweiten Schlitten 14 und der Option der wahlweise anstellbaren Abstützflächen 12a, 12b elegant gelöst werden.

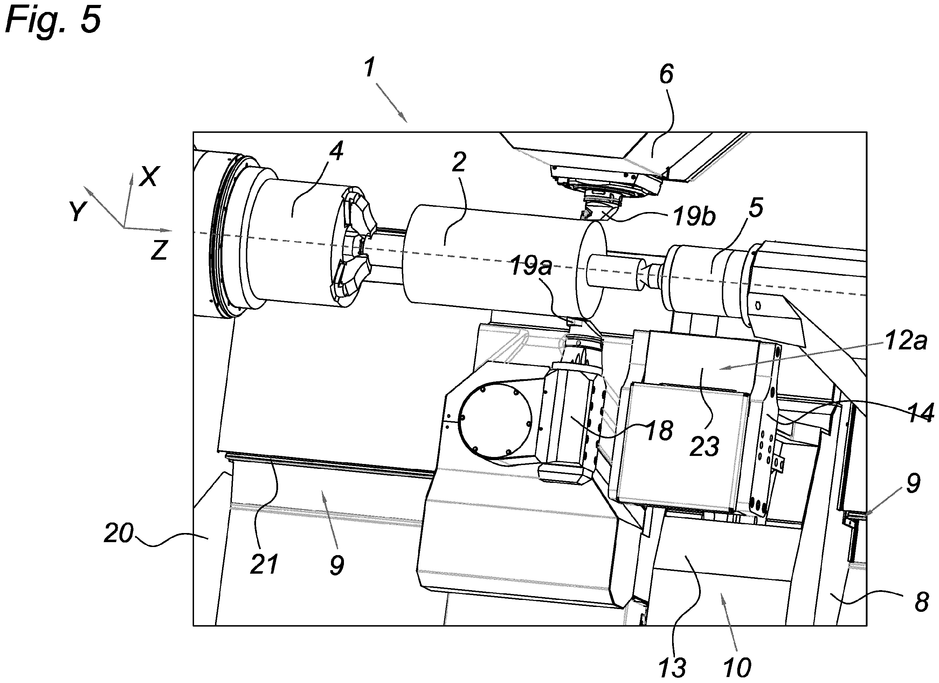

Nach Fig. 5 ist die Vorbearbeitung des Werkstücks 2 näher dargestellt. Hierzu weist der Z-Schlitten 8 zusätzlich einen beweglichen Werkzeughalter 18 für ein erstes Drehwerkzeug 19a auf. Dem ersten Drehwerkzeug 19a liegt am Werkstück 2 ein zweites Drehwerkzeug 19b gegenüber. Das zweite Drehwerkzeug 19b ist an der Werkzeugspindel 6 eingespannt. Beide Drehwerkzeug 19a und 19b bearbeiten das sich drehende Werkstück 2 gleichzeitig zu einem vorbearbeiteten Werkstück 2, dessen Außenkontur 3 nach Fig. 1 anschließend weiterbearbeitet wird.

Damit sich der Werkzeughalter 18 und die Abstützeinrichtung 10 nicht gegenseitig behindern, ist der Werkzeughalter 18 in Z-Richtung gesehen links neben der Abstützeinrichtung 10 auf Abstand angeordnet.

Die Werkzeugmaschine 1 weist zudem einen Werkzeugwechsler 20 auf, der an einem linken Ende, wie in Fig. 5 dargestellt, der Z-Bettführung 21 der Werkzeugmaschine 1 angeordnet ist. Der Werkzeugwechsler 20 ist dazu ausgebildet, das Werkzeug 19a des Z-Schlittens 8 automatisch zu wechseln.

## Patentansprüche

1. Verfahren zur Herstellung eines Werkstücks (2, 200) mit einer Außenkontur (3), insbesondere eines Rotors eines Schraubenverdichters, bei dem ein Werkstück (2, 200) in einer um eine Drehachse (D) in Z-Richtung der Werkzeugmaschine (1) drehbaren Werkstückaufnahme der Werkzeugmaschine (1) eingespannt wird,
das Werkstück (2, 200) an der Außenkontur (3) zumindest an einer ersten und einer zweiten Abstützfläche (11, 12a, 12b), insbesondere Gleitfläche, einer Abstützeinrichtung (10) abgestützt wird, wobei zumindest diese beiden Abstützflächen (11, 12a, 12b) um die Drehachse (D) zueinander winkelversetzt angeordnet sind, wobei die erste und/oder die zweite Abstützfläche (11, 12a, 12b) über zumindest einen, insbesondere linear, geführten Schlitten (13, 14) am Werkstück (2, 200) angestellt wird, der an einem Z-Schlitten (8) der Werkzeugmaschine (1) vorgesehen ist, und
das Werkstück (2, 200) mit einem Werkzeug (7), insbesondere Fräswerkzeug, spanend bearbeitet wird, um am Werkstück (2, 200) die Außenkontur (3), insbesondere eine schraubensymmetrische Außenkontur (3), zu erzeugen.

2. Verfahren nach Anspruch 1, **dadurch gekennzeichnet, dass** die erste Abstützfläche (11) mit dem ersten am Z-Schlitten (8) geführten Schlitten (13), insbesondere entlang der X-Richtung der Werkzeugmaschine (1), angestellt wird und/oder die zweite Abstützfläche (12a, 12b) über einen zweiten Schlitten (14), insbesondere entlang der Y-Richtung der Werkzeugmaschine (1), angestellt wird, welcher zweite Schlitten (14) am ersten Schlitten (13) geführt ist.

3. Verfahren nach einem der vorhergehenden Ansprüche, **dadurch gekennzeichnet, dass** die Längsrichtungen (L) der ersten und/oder zweiten Abstützfläche (11, 12a, 12b) im Wesentlichen in Z-Richtung der Werkzeugmaschine (1) verlaufen.

4. Verfahren nach einem der vorhergehenden Ansprüche, **dadurch gekennzeichnet, dass** die erste und/oder zweite Abstützfläche (11, 12a, 12b) in radiale Richtung an das Werkstück (2, 200) hingeführt wird und/oder dass der Schlitten (13, 14) nach einem Hinführen der ersten und/oder zweiten Abstützfläche (11, 12a, 12b) in seiner Position festgeklemmt wird.

5. Verfahren nach einem der vorhergehenden Ansprüche, **dadurch gekennzeichnet, dass** das abgestützte Werkstück (2, 200) unter Drehung um die, insbesondere durch das Werkstück (2, 200) zentrisch verlaufende, Drehachse (D) spanend bearbeitet wird.

6. Verfahren nach einem der vorhergehenden Ansprüche, **dadurch gekennzeichnet, dass** nacheinander zwei Werkstücke (2, 200), insbesondere zwei in der Außenkontur (3) verschiedene Rotoren eines Doppel-Schraubenverdichters, hergestellt werden, wobei die Abstützeinrichtung (10) zwei zweite Abstützflächen (12a, 12b) aufweist, die jeweils eines der Werkstücke (2, 200) abstützen, wobei die zweiten Abstützflächen (12a, 12b) an einander gegenüberliegenden Außenseiten des zweiten Schlittens angeordnet sind.

7. Verfahren nach einem der vorhergehenden Ansprüche, **dadurch gekennzeichnet, dass** vor der Abstützung des Werkstücks (2, 200) eine spanende Vorbearbeitung des Werkstücks stattfindet, bei der mit zwei einander am Werkstück (200), insbesondere diametral, gegenüberliegenden Drehwerkzeugen die Außenkontur (3) mit Aufmaß eingebracht wird.

8. Werkzeugmaschine (1) zur Herstellung eines Werkstücks (2, 200) mit einer Außenkontur (3), insbesondere eines Rotors eines Schraubenverdichters,
mit einer einen Werkstückhalter aufweisenden Werkstückspindel zur Drehung eines einzuspannenden Werkstücks (2, 200) um eine Drehachse (D) in Z-Richtung der Werkzeugmaschine (1),
mit einer mehrachsig bewegbaren Werkzeugspindel (4) für ein Werkzeug (7), insbesondere Fräswerkzeug, zur spanenden Bearbeitung des Werkstücks (2, 200) und
mit einem Z-Schlitten (8) an einem Maschinenbett (9) der Werkzeugmaschine (1), der eine Abstützeinrichtung (10) zum Abstützen des eingespannten Werkstücks (2, 200) bei dessen spanenden Bearbeitung aufweist, wofür die Abstützeinrichtung (10) eine erste und eine zweite Abstützfläche (11, 12a, 12b), insbesondere Gleitfläche, aufweist, die zueinander um die Drehachse (D) winkelversetzt angeordnet sind, wobei der Z-Schlitten (8) zusätzlich zumindest einen, insbesondere linear, geführten Schlitten (13, 14) aufweist, an dem die erste und/oder zweite Abstützfläche (11, 12a, 12b) vorgesehen ist.

9. Werkzeugmaschine nach Anspruch 8, **dadurch gekennzeichnet, dass** ein am Z-Schlitten (8), insbesondere in X-Richtung der Werkzeugmaschine (1), geführter erster Schlitten (13) die erste Abstützfläche (11) aufweist und/oder ein am ersten Schlitten (13), insbesondere in Y-Richtung der Werkzeugmaschine (1), geführter zweiter Schlitten (14) die zweite Abstützfläche (12a, 12b) aufweist.

10. Werkzeugmaschine nach Anspruch 9, **dadurch gekennzeichnet, dass** der erste Schlitten (13) eine, insbesondere abgewinkelte, Konsole (15) aufweist, an deren zweiten Konsolenschenkel (15b) der zweite Schlitten (14) beweglich gelagert ist.

11. Werkzeugmaschine nach einem der Ansprüche 8 bis 10, **dadurch gekennzeichnet, dass** zwischen Z-Schlitten (8) und erstem Schlitten (13) eine erste Linearführung (17a), insbesondere Profilschienenführung, und/oder zwischen erstem und zweitem Schlitten (13, 14) eine zweite Linearführung (17b), insbesondere Profilschienenführung, vorgesehen ist.

12. Werkzeugmaschine nach einem der Ansprüche 8 bis 11, **dadurch gekennzeichnet, dass** die erste Abstützfläche (11) von einer Gleitleiste (22) und/oder die zweite Abstützfläche (12a, 12b) von zumindest einer Gleitplatte (23) ausgebildet wird.

13. Werkzeugmaschine nach einem der Ansprüche 8 bis 12, **dadurch gekennzeichnet, dass** der zweite Schlitten (14) zwei zweite Abstützflächen (12a, 12b) aufweist, die an einander gegenüberliegenden Außenseiten, insbesondere je in einer X-Z-Ebene der Werkzeugmaschine (1), des zweiten Schlittens (14) vorgesehen sind.

14. Werkzeugmaschine nach einem der Ansprüche 8 bis 13, **dadurch gekennzeichnet, dass** der Z-Schlitten (8) zusätzlich einen beweglichen Werkzeughalter (18) für ein Werkzeug (19a), insbesondere Drehwerkzeug, aufweist, welcher Werkzeughalter, insbesondere in Z-Richtung gesehen, neben der Abstützeinrichtung (10) angeordnet ist.

15. Werkzeugmaschine nach Anspruch 14, **dadurch gekennzeichnet, dass** die Werkzeugmaschine (1) einen Werkzeugwechsler aufweist, der an einem Ende der Z-Bettführung der Werkzeugmaschine (1) angeordnet und ausgebildet ist, um das Werkzeug (19a) des Werkzeughalters (18) des Z-Schlittens (8) zu wechseln.
